**Europäisches Patentamt**

**European Patent Office**

**Office européen des brevets**

(11) Veröffentlichungsnummer: **0 318 583**

**A1**

## (12) EUROPÄISCHE PATENTANMELDUNG

veröffentlicht nach Art. 158 Abs. 3 EPÜ

(21) Anmeldenummer: 87906034.1

(22) Anmeldetag: 29.05.87

Daten der zugrundeliegenden internationalen Anmeldung:

(86) Internationale Anmeldenummer:
**PCT/SU 87/00064**

(87) Internationale Veröffentlichungsnummer:
**WO 88/09231 (01.12.88 88/26)**

(51) Int. Cl.⁴: **B 21 C 37/30, B 23 B 5/16**

(43) Veröffentlichungstag der Anmeldung: 07.06.89
**Patentblatt 89/23**

(84) Benannte Vertragsstaaten: **DE FR GB IT SE**

(71) Anmelder: **URALSKY NAUCHNO-ISSLEDOVATELSKY INSTITUT TRUBNOI PROMYSHLENNOSTI, ul. Novorossiiskaya, 30, Chelyabinsk, 454139 (SU)**

(72) Erfinder: **KOLESNIKOV, Konstantin Ivanovich, Kopeiskoe shosse, 47-359, Chelyabinsk, 454010 (SU)**
Erfinder: **FEDORININ, Viktor Stepanovich, pr. Slavy, 23-63 Chelyabinskaya obl., Kopeisk, 456623 (SU)**
Erfinder: **PYKHOV, Sergei Inokentievich, ul. Svobody, 86-16, Chelyabinsk, 454000 (SU)**
Erfinder: **KALYAGIN, Genrikh Konstantinovich, ul. Grazhdanskaya, 10a-121, Chelyabinsk, 454078 (SU)**
Erfinder: **ISAENKO, Alexandr Nikolaevich, ul. Mashinostroitelei, 37-42, Chelyabinsk, 454139 (SU)**
Erfinder: **MYAGKOV, Jury Petrovich, Kutuzovsky pr., 5/3-78, Moscow, 121208 (SU)**
Erfinder: **GOLBERG, Viktor Yakovlevich, ul. Vasilisy Kozhinoi, 8-3-45, Moscow, 121309 (SU)**
Erfinder: **KRICHEVSKY, Evgeny Markovich, ul. Oleko Dundicha, 5-91, Moscow, 121096 (SU)**
Erfinder: **POKLONOV, Gennady Gavrilovich, ul. Agrokhimikov, 7-99 Moskovskaya obl., pos.**

㉒ **Nemchinovka, 143013 (SU)**
Erfinder: **KONONOVA, Valentina Ivanovna, ul. 26 Bakinskikh komissarov, 12-3-229, Moscow, 117526 (SU)**
Erfinder: **LAMIN, Alexandr Borisovich, ul. 26 Bakinskikh komissarov, 1-1-27, Moscow, 117571 (SU)**
Erfinder: **VETROV, Evgeny Ivanovich, ul. Sojuznaya, 2-16 Moskovskaya obl., Odintsovo, 144021 (SU)**
Erfinder: **BUKASEV, Jury Anatolievich, ul. Shaumyana, 91-12, Chelyabinsk, 454011 (SU)**
Erfinder: **MOROZ, Sergei Nikolaevich, ul. Gorkogo, 66-125, Chelyabinsk, 454081 (SU)**
Erfinder: **SCHERBININ, Vitaly Evgenievich, ul. Sofii Kovalevskoi, 18, Sverdlovsk, 620219 (SU)**
Erfinder: **VASIN, Alexei Andreevich, ul. 1812 goda, 7-61, Moscow, 123293 (SU)**
Erfinder: **KHABIBULLIN, Farid Sibagatovich, ul. Batumskaya, 16-32, Chelyabinsk, 454019 (SU)**
Erfinder: **FROLOVA, Marina Alexandrona, ul. Agalakova, 39-13, Chelyabinsk, 454010 (SU)**

(74) Vertreter: **Finck, Dieter et al, Patentanwälte v. Füner, Ebbinghaus, Finck Mariahilfplatz 2 & 3, D-8000 München 90 (DE)**

(54) **VORRICHTUNG ZUM INNENENTGRATEN VON GESCHWEISSTEN ROHREN.**

㊐ Die Vorrichtung ist zum Einsatz in der Herstellung von geschweißten Rohren mit einem Durchmesser von 50 bis 500 mm bestimmt.

Die Vorrichtung enthält einen Schneidenkopf 3, eine Andrückvorrichtung 7 zum Andrücken des Schneidenkopfes 3 an die Innenfläche des Rohres 6, welche mit einem Antrieb 10 versehen ist, und eine Einrichtung 11 zur Regelung der Stellung des Schneidenkopfes 3 im Laufe des Betriebes der Vorrichtung. Die Einrichtung (11) verbindet die Andrückvorrichtung 7 zum Andrücken des Schneidenkopfes 3 mit ihrem Antrieb 10.

FIG.1

**EP 0 318 583 A1**

# VORRICHTUNG ZUM ENTFERNEN VON INTERNEM GRAT IN GESCHWEISSTEN ROHREN

## Gebiet der Technik

Die vorliegende Erfindung bezieht sich auf die Herstellung von Rohren und betrifft insbesondere eine Vorrichtung zum Entfernen von internem Grat in geschweißten Rohren.

## Stand der Technik

Zur Zeit hat sich bei der Herstellung von Rohren eine Tendenz zu einer intensiven Vergrößerung der Produktion von elektrisch geschweißten Rohren abgezeichnet, die im Vergleich zu den nahtlosen Rohren bestimmte Vorzüge aufweisen. Zu diesen Vorzügen gehören eine hohe Genauigkeit hinsichtlich der Wanddicke und des Innendurchmessere, niedrigere Selbstkosten (um 30 Prozent niedriger als bei den nahtlosen Rohren), ein geringerer Metallverbrauch.

Eine Ersetzung von nahtlosen Rohren durch elektrisch geschweißte Rohre wird jedoch in vielen Fällen dadurch begrenzt, daß die zuletzt genannten Rohre externen und internen Schweißgrat aufweisen, dessen Bildung durch Rohrschweißverfahren selbst bedingt ist. Durch das Vorhandensein eines internen Längsgrates werden der hydrodynamische Widerstand erhöht, die zu befördernden Medien verunreinigt, die Rohre für Verkabelungen untauglich gemacht, der Prozeß einer sekundären Verarbeitung der elektrisch geschweißten Rohre negativ beeinflußt.

Bei der Herstellung von elektrisch geschweißten Rohren ist man bestrebt, Grat zu entfernen oder dessen Größe zu vermindern; aber keine von den bestehenden Technologien kann ein vollständiges Entgraten gewährleisten.

Der externe Grat wird in der Regel mittels eines Meißels abgeschnitten, während der interne Grat nach verschiedenen Verfahren entfernt wird: er wird mittels einer Rolle eingerollt, in einem Sauerstoffstrom verbrannt und mittels Meißel abgeschnitten.

Die bestehenden Vorrichtungen zum Entgraten gewährleisten ein Abschneiden des Grates mit zulässiger Höhe des Gratrestes nicht. Zur Kontrolle der Höhe des entstandenen Grates werden bei der Herstellung von elektrisch geschweißten Rohren ein Muster des betreffenden Rohres ausgeschnitten, dessen Mikroschliff angefertigt und mit einem Mikroskop seine Höhe gemessen. Eine solche Kontrolle ist nicht ausreichend operativ. Wenn die Grathöhe den zulässigen Wert übersteigt oder wenn die Anschnittiefe des Meißels beim Anschneiden der Rohrwand zu groß ist, wird die Rohrschweißanlage stillgesetzt; man schneidet eine Öffnung am Rohr hinter dem Meißel in der Bewegungsrichtung des Rohres aus, bewegt man das Rohr rückwärts, bis die Öffnung mit dem Meißel zusammenfällt, und regelt man die Stellung des Meißels mittels Abstandsstücke oder anderer Einrichtungen.

Außerdem werden die Rollen von Röhrenstreifen (Bandstahl) stumpfgeschweißt, um auf diese Weise eine Kontinuität der Rohrherstellung zu gewährleisten. Dadurch wird ein Querschweißstoß (Schweißnaht) hergestellt, der beim Passieren des Meißels zu einem Bruch desselben führt. Zur Auswechselung des Meißels wird eine Öffnung am Rohr ausgeschnitten, der Meißel wird ausgewechselt und in der Höhe eingestellt. Dieser Arbeitsgang nimmt 5 bis 10 Minuten in Anspruch. Deshalb ist bei einer solchen Technologie des Entgratens die Leistung der Rohrschweißanlage sehr gering.

Es ist eine Vorrichtung zum Entfernen des internen Grates in Rohren (SU, A, 216597) bekannt, die einen Schneidenkopf mit einer oberen und einer unteren Tragrolle, eine Andrückvorrichtung zum Andrücken des Schneidenkopfes an die Innenfläche des Rohres sowie einen Antrieb für die Andrückvorrichtung enthält. Ein Nachteil dieser Vorrichtung besteht darin, daß es unmöglich ist, die Anschnittiefe des Meißels im Laufe des Betriebes der Vorrichtung zu regeln, um elektrisch geschweißte Rohre mit zulässiger Höhe des Gratrestes herzustellen. Eine Regelung der Anschnittiefe des Meißels wird bei dieser Vorrichtung bei einer Stillsetzung der Rohrelektroschweißanlage durchgeführt. Dieser Arbeitsgang zur Änderung der Anschnittiefe des Meißels nimmt 5 bis 10 min in Anspruch und soll nach einer jeden Auswechselung des Meißels (bei dessen Verschleiß oder Bruch) wiederholt werden.

Es ist eine Vorrichtung zum Entfernen des internen Grates in Rohren (SU, A, 442016) bekannt, die einen Schneidenkopf mit oberen und unteren Stützrollen und eine Andrückvorrichtung zum Andrücken des Schneidenkopfes an die Innenfläche des Rohres enthält, die mit einem Antrieb versehen und in Form eines Hydraulikzylinders mit einem Plunger ausgeführt ist, der im Unterteil des Hohlkörpers des Schneidenkopfes untergebracht ist. Diese Vorrichtung kann jedoch ebenfalls die Herstellung von geschweißten Rohren mit zulässiger Höhe des Gratrestes nicht gewährleisten, weil es unmöglich ist, beim Betrieb dieser Vorrichtung die Anschnittiefe des Meißels zu regeln. Die Regelung der Anschnittiefe kann bei dieser Vorrichtung nur bei einer Stillsetzung der Rohrelektroschweißanlage vorgenommen werden, was zu einer wesentlichen Senkung der Leistung der Vorrichtung führt.

Offenbarung der Erfindung

Der vorliegenden Erfindung wurde die Aufgabe zugrunde gelegt, eine Vorrichtung zum Entfernen von internem Grat in geschweißten Rohren zu entwickeln, die eine Regelung der Anschnittiefe des Meißels in den Grat während des Betriebes der Vorrichtung gewährleistet.

Diese Aufgabe wird dadurch gelöst, daß die Vorrichtung zum Entfernen von internem Grat in geschweißten Rohren, die einen Hohlkörper eines Schneidenkopfes mit Führungen und eine Andrückvorrichtung zum Andrücken des Schneidenkopfes an die Innenfläche des Rohres, welche mit einem Antrieb versehen ist, enthält, erfindungsgemäß, mit einer zur Regelung der Stellung des Schneidenkopfes im Laufe des Betriebes der Vorrichtung dienenden Einrichtung versehen ist, über welche die Andrückvorrichtung zum Andrücken des Schneidenkopfes mit ihrem Antrieb G gekoppelt ist.

Von der erfindungsgemäßen Vorrichtung wird im Laufe des Betriebes eine Regelung der Anschnittiefe des Schneidenkopfes beim Abschneiden des Grates gewährleistet.

Dadurch wird es möglich, die Leistung der Vorrichtung durch Vermeiden von Stillsetzungen der Rohrelektroschweissanlage zu erhöhen, die für die Regelung der Stellung des Meißels in der Höhe beim Einspannen desselben zu Beginn des Betriebes sowie bei dessen Verschleiß im Laufe des Betriebes notwendig sind.

Die Verwendung der erfindungsgemäßen Vorrichtung gestattet es, den Prozentanteil des Ausschusses dadurch wesentlich zu verringern, daß die Stellung des Schneidenkopfes im Laufe des Betriebes der Vorrichtung geregelt werden kann.

Es ist zweckmäßig, daß die Einrichtung zur Regelung der Stellung des Schneidenkopfes aus zwei miteinander verbundenen Teilen ausgeführt wird, von denen der eine Teil im Hohlkörper des Schneidenkopfes untergebracht ist und mit der Andrückvorrichtung zum Andrücken des Schneidenkopfes in Wechselwirkung steht, während der andere Teil auf dem bewegbaren Teil des Antriebes angeordnet ist.

Es ist recht zweckmäßig, daß einer der Teile der Einrichtung, der im Hohlkörper des Schneidenkopfes untergebracht ist, in Form eines Keils ausgeführt ist, der in Führungen des Schneidenkopfes angeordnet ist, während der andere Teil ein Schraubenpaar darstellt, wobei die Andrückvorrichtung zum Andrücken des Schneidenkopfes in Form eines zweiarmigen Hebels ausgebildet ist, der im Körper des Schneidenkopfes angelenkt ist und dessen eines Ende mit der Arbeitsfläche des Keils in Wechselwirkung steht, während das andere Ende mit einer Stützrolle versehen ist, die mit der Innenfläche des Rohres in Berührung steht, wobei der Antrieb einen Arbeitszylinder darstellt, wobei an dem über den Zylinder hinausragenden Abschnitt der Kolbenstange dieses Zylinders ein Schraubenpaar angeordnet ist.

Eine solche Konstruktion der Einrichtung gestattet es, die Verbindung zwischen der Andrückvorrichtung zum Andrücken des Schneidenkopfes und dem Antrieb dieser Vorrichtung besonders einfach herzustellen. Dadurch, daß das Schraubenpaar an der Kolbenstange des Arbeitszylinders angeordnet ist, wird es möglich, den Arbeitshub - des Kolbens dieses Arbeitszylinders zu ändern und folglich die Stellung des mit dem Arbeitszylinder gekoppelten Schneidenkopfes zu regeln und damit die Anschnittiefe des Meißels im Laufe des Betriebes der Vorrichtung einzustellen.

Nach einer der Ausführungsformen der Erfindung ist die Einrichtung zur Regelung der Stellung des Schneidenkopfes mit einem Antrieb, der mit einem Schraubenpaar gekoppelt ist, sowie mit einen Geber zur Überwachung der Höhe des Gratrestes, der mit diesem Antrieb elektrisch gekoppelt ist, versehen.

Die vorliegende Ausführungsform der Erfindung gestattet es, den Prozeß der Regelung der Stellung des Schneidenkopfes und folglich der Regelung der Anschnittiefe des Meißels im Laufe der Betriebes der Vorrichtung zu automatisieren. Das gestattet seinerseits, die Leistung der Vorrichtung wesentlich zu erhöhen.

Nach einer anderen Ausführungsform der Erfindung ist der Geber für di Überwachung der Höhe des Gratrestes in Form einer federbelasteten Folgerolle ausgeführt, die am Körper des Schneidenkopfes in einer Vertikalebene mit der Schneide des Meißels, welche senktrecht zur Bewegungsrichtung des zu bearbeitenden Rohres liegt, angeordnet ist und mit der Innenfläche des Rohres in Berührung steht.

Der Geber einer solchen Bauart gestattet es, eine automatische Verfolgung der Änderung der Höhe des Gratrestes zu gewährleisten.

Bei einer bevorzugten Ausführungsform der Erfindung ist der Geber für die Überwachung der Höhe des Gratrestes aus zwei Elektromagneten, die am Rohr von außen zu beiden Seiten seiner Schweißnaht angeordnet sind und zusammen mit diesem einen geschlossenen Eisenkern bilden, und einem Wandler zum Umwandeln des elektromagnetischen Feldes in ein elektrisches Signal, der zwischen den Elektromagneten an der Außenseite des Rohres oberhalb der Schweißnaht dieses Rohres angeordnet ist, aufgebaut.

Eine solche Ausführungsform des Gebers ermöglicht es, eine steifere und zuverlässigere Konstruktion dieses Gebers zu schaffen, dessen Wartungszeit zu reduzieren, die Einstelung des Gebers im Laufe des Betriebes der Vorrichtung durchzuführen und den Geber beim Bruch schnell auszuwechseln. Eine solche Ausführungsvariante des Gebers ist zweckmäßigerweise in den Fällen zu verwenden, wo der interne Grat in geschweißten Rohren mit einem ge- ringeren Durchmesser schwer zugänglich ist.

Bei einer weiteren Ausführungsform der Erfindung ist der Antrieb der Andrückvorrichtung zum Andrücken des Schneidenkopfes mit einem Geber für den Querschweißstoß des Rohres versehen, der an der Außenseite des Rohres vor dem Schneidenkopf in der Bewegungsrichtung des Rohres angeordnet und mit diesem Antrieb elektrisch gekoppelt ist.

Die vorgeschlagene Bauart des Gebers gestattet es, die Anzahl von Brüchen des Meißels zu vermindern und seine Lebensdauer zu erhöhen. Das führt dementsprechend zu einer Erhöhung der Leistung der Vorrichtung. Dadurch, daß der Geber an der Außenseite des Rohres angeordnet ist, wird es möglich, eine steife und zuverlässige Konstruktion des Gebers zu schaffen, die Reparatur oder die Auswechselung des Gebers beim Bruch operativ durchzuführen. Die Verwendung des Gebers macht es möglich, die Abhebung des Schneidenkopfes von der Innenfläche des Rohres vor dessen Querschweißnaht im Laufe des Betriebes der Vorrichtung automatisch durchzuführen.

Es ist recht zweckmäßig, daß der Geber für den Querschweißstoß des Rohres in Form von zwei Spulen ausgeführt wird, welche das Rohr umgeben und in einem Abstand voneinander angeordnet sind, der die Breite des Querschweißstosses des Rohres übersteigt.

Die erfindungsgemäße Konstruktion des Gebers ist bedienungsfreundlich, einfach und betriebszuverlässig.

Kurze Beschreibung der Zeichnungen

Andere Ziele und Vorteile der vorliegenden Erfindung werden nachfolgend anhand einer eingehenden Beschreibung der Ausführungsbeispiele der Erfindung und der beigefügten Zeichnungen näher erläutert. Es zeigen:

Fig. 1 eine erfindungsgemäße Vorrichtung (im Vertikalschnitt);

Fig. 2 einen Schnitt nach II-II in Fig. 1;

Fig. 3 eine schematische Darstellung des Gebers für den Querschweißstoß des Rohres;

Fig. 4 eine Ausführungsform der Konstruktion des Gebers für die Überwachung der Höhe des Gratrestes;

Fig. 5 einen Schnitt nach V-V in Fig. 4.

Bevorzugte Ausführungsform der Erfindung

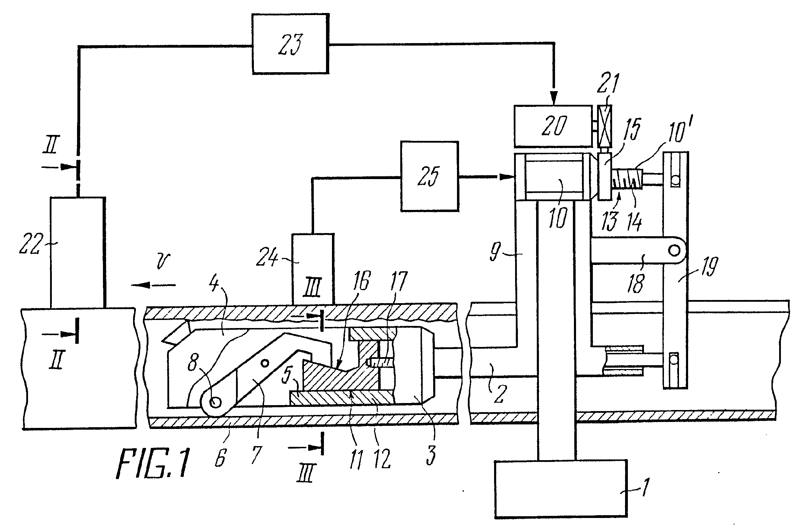

Die erfindungsgemäße Vorrichtung enthält eine an einer Stütze 1 (Fig. 1) des Gerüstes einer Rohrelektroanlage (in Fig. nicht widergegeben) befestigte Hohlstange 2, an deren Ende ein Schneidenkopf 3 angeordnet ist, der einen Hohlkörper 4 mit Führungen 5 aufweist. In der Vorrichtung ist eine Andrückvorrichtung 7 zum Andrücken des Schneidenkopfes 3 an die Innenfläche des Rohres 6 vorgesehen, die in Form eines zweiarmigen Hebels ausgeführt ist, welcher im Körper 4 des Schneidenkopfes 3 angelenkt ist und dessen eines Ende mit einer Stützrolle 8 versehen ist, die mit der Innenfläche des Rohres 6 in Berührung steht. Die Hohlstange 2 weist einen Ansatz 9 auf, an dem ein Antrieb 10 der Vorrichtung 7 zum Andrücken des Schneidenkopfes 3 angeor     st, welche in Form eines Arbeitszylinders ausgeführt ist, in dessen Hohlraum ein Kolben (nicht gezeigt) mit einer Kolbenstange 10' angeordnet ist. Die erfindungsgemäße Vorrichtung enthält auch eine Einrichtung 11 zur Regelung der Stellung des Schneidenkopfes 3, über welche die Vorrichtung 7 zum Andrücken des Schneidenkopfes 3 an die Innenfläche des Rohres 6 mit dem Antrieb 10 verbunden ist. Diese Einrichtung besteht aus zwei Teilen, von denen der eine Teil in Form eines Keils   ausgebildet ist, der in Führungen 5 des Schneidenkopfes 3 angeordnet ist, während der andere Teil als Schraubenpaar 13 ausgeführt ist, das an der über den Arbeitszylinders 10 hinausragenden Kolbenstange 10' angeordnet ist. Das Schraubenpaar 13 ist durch einen mit einem Gewinde versehenen Abschnitt 14 der Kolbenstange 10' gebildet, an welchem eine Mutter 15 angeordnet ist.

Das andere Ende des zweiarmigen Hebels der Vorrichtung 7 steht mit der Arbeitsfläche 16 des Keils 12 in Wechselwirkung, der mit einem der Enden der Zugstange 17 starr verbunden ist, die durch die Stange 2 geführt ist.

Die Arbeitsfläche 16 des Keils 12 ist so bemessen daß das Entgraten im Bereich der Toleranz gewährleistet wird, die für die Änderung des Innendurchmessers des Rohres 6 vorgesehen ist.

  einer Konsole 18, welche am Ansatz 9 befestigt ist, ist ein zweiarmiger Hebel 19 angelenkt, dessen eines Ende mit der Kolbenstange 10' des Arbeitszylinders gelenkig verbunden ist, während das andere Ende mit dem zweiten Ende der Zugstange 17 gelenkig gekoppelt ist.

  Die Einrichtung 11 zur Regelung der Stellung des Schneidenkopfes 3 ist mit einem Antrieb 20 versehen, der mittels eines Riementriebes 21 mit der Mutter 15 des Schraubenpaares 13 kinematisch verbunden ist.

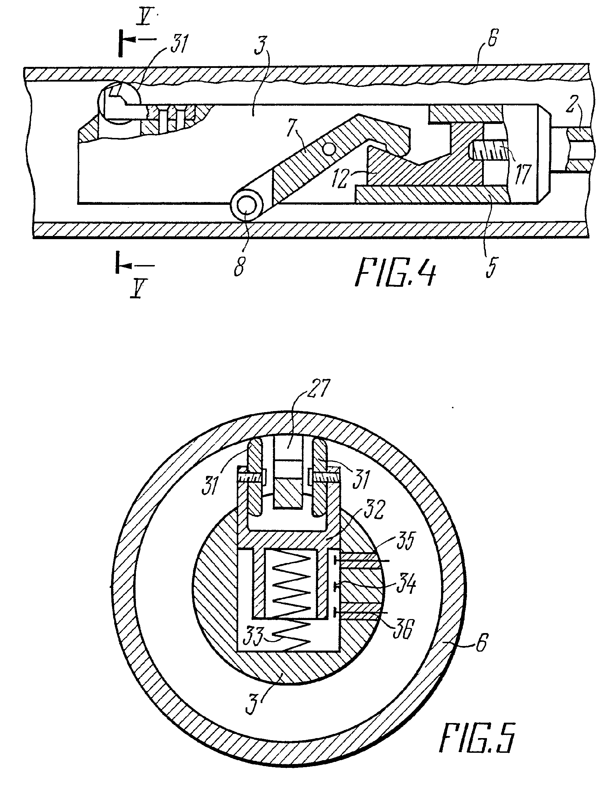

Die Vorrichtung ist mit einem Geber 22 für die Überwachung der Höhe des Gratrestes versehen, der über ei elektronischen block 23 mit dem Antrieb 20 elektrisch gekoppelt ist. In der Vorrichtung ist ein Geber 24 für den Querschweißstoß 24' (Fig. 3) des Rohres 6 vorgesehen, der an der Außenseite des Rohres 6 vor dem Schneidenkopf 3 in der Bewegungsrichtung des Rohres 6 angeordnet und über einen elektronischen Blick 25 (Fig. 1) mit einem elektromagnetischen Ventil nicht wiedergegeben) des Arbeitszylinders 10 elektrisch gekoppelt ist.

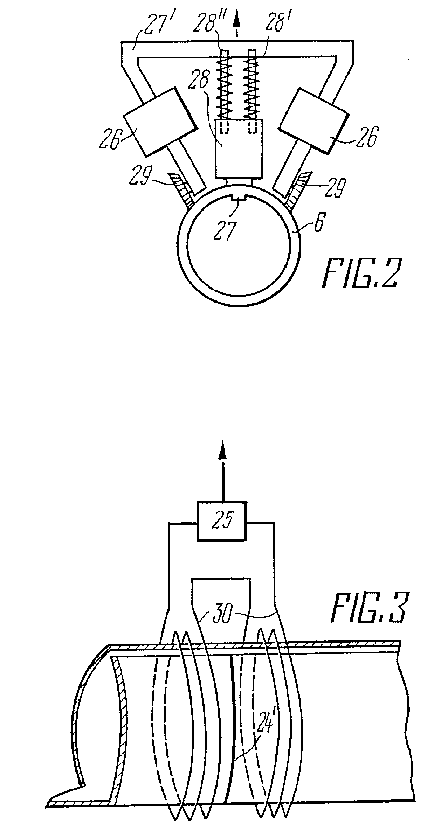

Der Geber 22 ist in Form von zwei Elektromagneten 26 (Fig. 2) ausgeführt, die an der Außenseite des Rohres 6 zu beiden Seiten seiner Schweißnaht 27 angeordnet sind und zusammen mit diesem einen geschlossenen Eisenkörper 27' bilden. Im Zwischenraum zwischen den Elektromagneten 26 ist an der Außenseite des Rohres 6 oberhalb seiner Schweißnaht 27 ein Wandler 28 angeordnet. Der Wandler 28 ist an Federn 28' aufgehängt, die am Eisenkern 27' relativ zu den Stäben 28" hin- und herbewegbar befestigt sind, welche von Federn 28' umgeben werden, wobei eines der Enden jedes stabes am Eisenkörper 27' befestigt ist. An den Elektromagneten 26 sind Rollen 29 angebracht, die mit der Außenfläche des Rohres 6 unmittelbar in Berührung stehen.

Der elektronische Block 23 (Fig. 1, 3) enthält einen Verstärker und einen elektronischen Umschalter sind nicht gezeigt).

Geber 24 ist aus zwei Spulen 30 ausgeführt, die das Rohr 6 umgeben und voneinander auf einer Entfernung angeordnet sind, die die Breite des Querschweißstosses 24' des Rohres 6 übersteigt.

Der elektronische Block 25 (Fig. 1) ist mit dem Geber 24 elektrisch gekoppelt und enthält einen mit den Spulen 30 in Reihe geschalteten Erregungsblock, einen Verstärker und eine Verzögerungsschaltung (in Fig. nicht wiedergegeben).

Die erfindungsgemäße Vorrichtung hat folgende Wirkungsweise.

Die Vorrichtung wird an einer Stütze 1 eines der Gerüste der Rohrformanlage befestigt, wobei der Schneidenkopf 3 hinter der Schweißzone des Rohres 6 angeordnet wird. Es wird ein Geber 24 für den Querschweißstoß montiert und ein Schlitzrohr (ein gerundetes, jedoch nicht geschweißtes Rohr) in die Anlage eingeführt. Nachdem das Schlitzrohr 6 hinter den Schneidenkopf 3 geführt ist, wird an dem Rohr 6 ein Geber 20 angeordnet. Dann wird an einem elektronischen Block 25 eine Zeitverzögerung eingestellt, die gewährleistet, daß der Querschweiß_ stoß 24' des Rohres 6 über dem Meißel im Ruhezustand des_ selben (der Meißel ist in der unteren Endstellung) bewegt wird. Die Zeitverzögerung wird mit Rücksicht auf die gewählte Geschwindigkeit des Schweißens des Rohres 6 und den Abstand zwischen der Schneide des Meißels und der Stelle gewählt, an der der Geber 24 angeordnet ist.

Danach wird an das elektromagnetische Ventil des Arbeitszylinders an die Abteilungsluftleitung (nicht gezeigt ) angeschlossen.

Bei der Inbetriebsetzung der Rohrelektroschweißan_ lage wird auch die Vorrichtung zum Entfernen von inter_ nem Grat in Betrieb genommen. Im Laufe des Betriebes der Vorrichtung wird die Druckluft aus der Abteilungs_ luftleitung in den Hohlraum des Arbeitszylinders zuge_ führt, wobei sie auf den Kolben einwirkt und diesen zusammen mit der Kolbenstange 10' bewegt. Von der Kol_ benstange 10' wird der Hebel 19 geschwenkt, der seiner_ seits die Zugstange 17 zusammen mit dem Keil 12 bewegt. Vom Keil 12 wird die Bewegung auf den Hebel der Vorricht_ ung 7 mit der Stützrolle 8 übertragen, welche auf die Innenfläche des Rohres 6 einwirkt und den Schneiden_ kopf 3 in seine Arbeitsstellung bringt. Der Meißel be_ ginnt den Grat abzuschneiden.

Das Rohr 6 mit abgeschnittenem Grat geht bei seiner Bewegung an dem Geber 22 der Höhe des Gratrestes vorbei. Beim Normalbetrieb, in dem der Grat vollständig (oder mit zulässiger Größe des Gratrestes) entfernt wird, hat das Ausgangssignal des Wandlers 28 einen minimalen Wert und reicht für das Auslösen des elektronischen Umschalters des Blockes 23 nicht aus. Das Auslösen des elektronischen Umschalters wird auf die Größe des elektrischen Signals eingestelslt, das den Grenzen der zulässigen Grathöhe entspricht.

Bei Änderung der Form des Rohres übersteigt die Größe des Gratrestes den zulässigen Wert. Dies führt zu einer Änderung des Magnetfeldes oberhalb der Schweißnaht 27, was durch den Wandler 28 des Gebers 22 erfaßt wird; dabei wird das Signal im Block 23 verstärkt und durch den elektronischen Umschalter der Antrieb 20 eingeschaltet, der mittels eines Riementriebes 21 die Mutter 15 in der Richtung dreht , in der der Hub des Kolbens des Arbeitszylinders zunimmt, was seinerseits zu einer Vergrößerung der Anschnittiefe des Meißels in den Grat führt.

Beim Anschnitt des Meißels in die Wand des Rohres 6 ändert sich die Größe des Magnetfeldes oberhalb der Schweißnaht 27, was durch den Wandler 28 fixiert wird, wobei das Vorzeichen der Magnetfeldänderung in diesem Fall dem oben beschriebenen Vorzeichen entgegengesetzt ist. Nach der Verstärkung des Signals wird es dem elektronischen Umschalter des Blockes 23 zugeführt, der nach dem Auslösen den Antrieb 20 einschaltet, welcher die Mutter 15 dreht und den Hub des Kolbens mit der Kolbenstange 10' herabsetzt, was eine Abwärtsbewegung des Schneidenkopfes 3 und folglich eine Verminderung der Anschnittiefe die Meißels bewirkt.

Wenn der Geber 24 des Schweißstosses 24' des Rohres 6 durch die Spulen 30 hindurchgeführt wird, entsteht am Eingang des Verstärkers des Blockes 25 ein Stromimpuls, der einer Verzögerungsschaltung zugeführt wird, und am Ausgang des Blockes 25 entsteht ein Signal für das Umschalten des elektromagnetischen Ventils, welches die Richtung der Zuführung der Luft in den Arbeitszylinder ändert und den Kolben mit der Kolbenstange 10' hinausstößt, was zu einer schnellen Abhebung des Schneidenkopfes 3 aus der Arbeitsstellung führt . Nachdem der Schweißstoß 24' oberhalb des Meißels (nach der Verzögerungszeit) geführt ist, wird die Richtung der Luftzuführung in den Arbeitszylinder durch das elektromagnetische Ventil erneut geändert, wonach der Schneidenkopf 3 in seine Arbeitsstellung zurückgebracht wird.

In Fig. 4, 5 ist eine schematische Darstellung einer Ausführungsvariante des Gebers 22 wiedergegeben, der in Form von Zwei Folgerollen 31 ausgeführt ist, welche zu beiden Seiten des Grates an einer Gabel 32 befestigt sind, die an einer Feder 33 abgestützt und im Körper 4 des Schneidenkopfes 3 bewegbar angeordnet ist. An der Gabel 32 ist ein Kontaktstück 34 montiert, und auf dem Wege der Verschiebung der Gabel 32 sind im Körper 4 des Schneidenkopfes 3 ein oberes Kontaktstück 35 und ein unteres Kontaktstück 36 angeordnet. Die Kontaktstücke 34, 35, 36 sind unmittelbar mit dem Steuerkreis des Antriebes 26 elektrisch gekoppelt. Als Antrieb 20 kann ein elektrischer Umkehrmotor eingesetzt werden. Die Folgerollen 31 sind in ein und derselben Vertikalebene mit der Schneide des Meißels, welche senkrecht zu der Bewegungsrichtung des zu bearbeitenden Rohres 6 liegt, angeordnet und stehen mit dessen Innenfläche in Berührung.

Bei einem Verschleiß des Meißels oder bei einer Änderung des Innendurchmessers und der Form des Rohres 6, wo die Größe des Gratrestes mehr als zulässig zunimmt, wird die Gabel 32 mit Stützrollen 31 angehoben. Dabei wird das Kontaktstück 34 der Gabel 32 mit dem Kontaktstück 35 verbunden, was zum Schließen des Steuerkreises des Antriebes 20 führt, der durch einen Riementrieb 21 die Mutter 15 des Scharubenpaares 13 dreht.

Der Hub des Arbeitszylinders nimmt zu, was eine Bewegung des Keils 12 in der Richtung vom zweiarmigen Hebel der Vorrichtung 7 her bewirkt. Das führt seinerseits zu einer Aufwärtsbewegung des Schneidenkopfes 3 und folglich zu einer Vergrößerung der Anschnittiefe des Meißels.

Im Falle, wo die Anschnittiefe des Meißels in die Innenwand des Rohres 6 die Grenzen eines zulässigen Wertes überschreitet, geht die Gabel 32 nieder, wobei das Kontaktstück 34 dieser Gabel mit dem Kontaktstück 36 geschlossen wird. Der Steuerkreis des Antriebes 20 wird geschlossen und der Antrieb 20 dreht durch den Riementrieb 21 di Mutter 15 des Schraubenpaares 13 in ungekehrter Richtung. Der Hub des Arbeitszylinders wird vermindert, was zu einer Bewegung des Keils 12 in der Richtung zum zweiarmigen Hebel der Vorrichtung 7 hin zu einer Verschiebung des Schneidenkopfes 3 nach unten und folglich zu einer Verminderung der Anschnittiefe des Meißels in die Wand des Rohres 6 führt.

Gewerbliche Anwendbarkeit

Die vorliegende Erfindung kann am effektivsten bei der Herstellung von elektrisch geschweißten Rohren mit einem Durchmesser von 50 bis 4500 mm zum Entgraten in den Rohren während des Betriebes eines Rohrelektroschweißwalzwerkes verwendet werden.

PATENTANSPRÜCHE

1. Vorrichtung zum Entfernen von internem Grat in geschweißten Rohren, die einen Schneidenkopf (3), welcher einen Hohlkörper (4) mit Führungen (5) aufweist, und eine Andrückvorrichtung ·(7) zum Andrücken des Schneidenkopfes (3) an die Innenfläche des Rohres (6), welche mit einem Antrieb (10) versehen ist, enthält, dadurch g e k e n n z e i c h n e t , daß sie mit einer Einrichtung (11) zur Regelung der Stellung des Schneidenkopfes (3) im Laufe des Betriebes der Vorrichtung ausgerüstets ist, über welche die Andrückvorrichtung (7) zum Andrücken des Schneidenkopfes (3) mit ihrem Antrieb (10) gekoppelt ist.

2. Vorrichtung nach Anspruch 1, dadurch g e - k e n n z e i c h n e t , daß die Einrichtung (11) zur Regelung der Stellung des Schneidenkopfes (3) aus zwei miteinander verbundenen Teilen ausgeführt ist, von denen der eine Teil im Hohlkörper (4) des Schneidenkopfes (3) untergebracht ist und mit der Andrückvorrichtung (7) zum Andrücken des Schneidenkopfes (3) in Wechselwirkung steht, während der andere Teil an dem bewegbaren Teil des Antriebes (10) angeordnet ist.

3. Vorrichtung nach Anspruch 2, dadurch g e - k e n n z e i c h n e t , daß einer der Teile, der im Hohlkörper (4) des Schneidenkopfes (3) untergebracht ist, in Form eines Keils (12) ausgeführt ist, der in Führungen (5) des Schneidenkopfes (3) angeordnet ist, während der andere Teil ein Schraubenpaar (13) darstellt, wobei die Andrückvorrichtung (7) zum Andrücken des Schneidenkopfes (3) in Form eines zweiarmigen Hebels ausgebildet ist, der im Körper (4) des Schneidenkopfes (3) angelenkt ist und dessen eines Ende mit der Arbeitsfläche (16) des Keils (12) in Wechselwirkung steht, während das andere Ende mit einer Stützrolle (8) versehen ist, die mit der Innenfläche des Rohres (6) in Berührung steht, wobei der Antrieb (10) als Arbeitszylinder ausgebildet ist, wobei an dem über den Zylinder hinausragenden Abschnitt der Kolbenstange (10) dieses Zylinders ein Schraubenpaar (13) angeordnet ist.

4. Vorrichtung nach Ansprüchen 1 bis 3, dadurch g e k e n n z e i c h n e t , daß die Einrichtung (11) zur Regelung der Stellung des Schneidenkopfes (3) mit einem mit einem Schraubenpaar (13) verbundenen Antrieb (20) sowie mit einem mit diesem Antrieb (20) elektrisch verbundenen Geber (22) für die Überwachung der Höhe des Gratrestes, versehen ist.

5. Vorrichtung nach Anspruch 4, dadurch g e k e n n z e i c h n e t , daß der Geber (22) für die Überwachung der Höhe des Gratrestes in Form einer federbelasteten Folgerolle (31) ausgeführt ist, die am Körper (4) des Schneidenkopfes (3) in ein und derselben Vertikalebene mit der Schneide des Meißels, welche senkrecht zur Bewegungsrichtung des zu bearbeitenden Rohres (6) liegt, angeordnet ist und mit der Innenfläche des Rohres (6) in Berührung steht.

6. Vorrichtung nach Anspruch 4, dadurch g e k e n n z e i c h n e t , daß der Geber (22) für die Überwachung der Höhe des Gratrestes aus zwei Elektromagneten (26), die am Rohr von außen zu beiden Seiten seiner Schweißnaht (27) angeordnet sind und zusammen mit diesem einen geschlossenen Eisenkörper (27') bilden, und einem zwischen den Elektromagneten (26) an der Außenseite des Rohres (6) oberhalb der Schweißnaht (27) dieses Rohres angeordneten Wandler (28) zum Umwandeln des elektromagnetischen Feldes in ein elektrisches Signal ausgeführt ist.

7. Vorrichtung nach Ansprüchen 1 bis 3, dadurch g e k e n n z e i c h n e t , daß der Antrieb (10) der Andrückvorrichtung zum Andrücken des Schneidenkopfes (3) mit einem Geber (24) für den Querschweißstoß (24') des Rohres (6) versehen ist, der an der Außenseite des Rohres (6) vor dem Schneidenkopf (3) in der Bewegungsrichtung des Rohres (6) angeordnet und mit diesem Antrieb (10) elektrisch gekoppelt ist.

8. Vorrichtung nach Anspruch 7, dadurch  g e _ k e n n z e i c h n e t ,  daß der Geber (24) für den Querschweißstoß (24') des Rohres (6) in Form von zwei Spulen (30) ausgeführt ist, welche das Rohr (6) umgeben und in einem Abstand voneinander angeordnet sind, der die Breite des Querschweißstosses (24') des Rohres (6) übersteigt.

FIG.1

00318583

FIG.2

FIG.3

00318583

FIG.4

FIG.5

# INTERNATIONAL SEARCH REPORT 00318583

International Application No PCT/SU 87/00064

## I. CLASSIFICATION OF SUBJECT MATTER (if several classification symbols apply, indicate all) [6]

According to International Patent Classification (IPC) or to both National Classification and IPC

$IPC^4$ – B 21 C 37/30, B 23 B 5/16

## II. FIELDS SEARCHED

| Minimum Documentation Searched [7] | |
|---|---|
| Classification System | Classification Symbols |
| $IPC^4$ | B 21 C 37/00, 37/06, 37/08, 37/30, B 23 B 5/16 |

| Documentation Searched other than Minimum Documentation to the Extent that such Documents are Included in the Fields Searched [8] |
|---|
| |

## III. DOCUMENTS CONSIDERED TO BE RELEVANT [9]

| Category [*] | Citation of Document, [11] with indication, where appropriate, of the relevant passages [12] | Relevant to Claim No. [13] |
|---|---|---|
| A | SU, A1, 716781 ,(Uralsky nauchno-issledovatelsky institut trubnoi promyshlennosti) 27 February 1980 (27.02.80) see the claims | 1-4 |
| A | SU, A1, 442016,(V.A. Verderevsky et al.) 18 January 1977 (18.01.77) see the claims | 5 |
| A | SU, A3, 512692, (Inostrannaya firma "Dalmine S.p.A. et al.)20 July 1976 (20.07.76), see the claims | 7-8 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 27 November 1987 (27.11.87) | 20 January 1988 (20.01.88) |
| International Searching Authority | Signature of Authorized Officer |
| ISA/SU | |

Form PCT/ISA/210 (second sheet) (January 1985)